(19) Europäisches Patentamt / European Patent Office / Office européen des brevets

(11) **EP 4 480 753 A1**

(12) **EUROPEAN PATENT APPLICATION**
published in accordance with Art. 153(4) EPC

(43) Date of publication:
25.12.2024 Bulletin 2024/52

(21) Application number: 23752754.4

(22) Date of filing: 01.02.2023

(51) International Patent Classification (IPC):
*B60Q 1/04* (2006.01)    *G06T 7/80* (2017.01)

(52) Cooperative Patent Classification (CPC):
B60Q 1/04; G06T 7/80

(86) International application number:
PCT/JP2023/003252

(87) International publication number:
WO 2023/153289 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.02.2022 JP 2022020546

(71) Applicant: KOITO MANUFACTURING CO., LTD.
Minato-ku
Tokyo 108-8711 (JP)

(72) Inventor: SUZUKI, Atsumi
Shizuoka-shi Shizuoka 424-8764 (JP)

(74) Representative: Algemeen Octrooi- en
Merkenbureau B.V.
P.O. Box 645
5600 AP Eindhoven (NL)

(54) **CALIBRATION METHOD AND CALIBRATION DEVICE**

(57) A calibration method includes forming a calibration pattern (PTNc) with a light distribution variable lamp (2) onto a screen (900) located at a distance from the light distribution variable lamp (2) and an imaging device (4), capturing an image of the calibration pattern (PTNc) with the imaging device (4), acquiring a correspondence relationship between position coordinates of an image (IMG) captured by the imaging device (4) and position coordinates of the calibration pattern (PTNc) in a light illumination range (IRR), calculating an amount of parallax difference between the light distribution variable lamp (2) and the imaging device (4), and correcting the correspondence relationship based on the amount of parallax difference and generating mutual position information between the light illumination range (IRR) and the imaging range.

FIG. 1

EP 4 480 753 A1

# EP 4 480 753 A1

**Description**

TECHNICAL FIELD

The present invention relates to calibration methods and calibration devices.

BACKGROUND ART

Adaptive driving beam (ADB) control is being proposed that dynamically and adaptively controls light distribution patterns based on the circumstances surrounding the vehicle. ADB control detects, with a camera, the presence of a front vehicle that should not be illuminated with high-illuminance light and blocks the region of the light that corresponds to the front vehicle (see, for example, Patent Literature 1). Blocking the region of the light that corresponds to the front vehicle can reduce glare caused on the driver of the front vehicle and can also improve the visibility for the driver of the host vehicle.

RELATED-ART LITERATURE

PATENT LITERATURE

Patent Literature 1: JP 2015-064964

SUMMARY OF INVENTION

TECHNICAL PROBLEM

For the light distribution control that uses camera images as in the ADB control described above, the positional relationship between light distribution patterns that lamps form and camera images need to be mapped to each other in advance. Therefore, lamps and cameras are calibrated therebetween, for example, in the production line of the lamps. In particular, in the case of a lamp with a built-in camera, where the camera and the lamp are housed in a single housing, it is desirable to execute the above calibration in the lamp's production line.

Improving the accuracy of light distribution control requires improving the accuracy of calibration. However, when calibration is performed in the production line, it is not easy to improve the accuracy of calibration due to, for example, spatial constraints.

The present invention has been made in view of such circumstances and is directed, in one aspect, to providing a technique for enhancing the accuracy of calibration between a lamp and an imaging device.

SOLUTION TO PROBLEM

To solve the problem described above, one aspect of the present invention provides a calibration method of calibrating between a light illumination range of a light distribution variable lamp that illuminates a region ahead of a vehicle with light and an imaging range of an imaging device that captures an image of the region ahead of the vehicle. This method includes forming a calibration pattern with the light distribution variable lamp onto a screen located at a distance from the light distribution variable lamp and the imaging device; capturing an image of the calibration pattern on the screen with the imaging device; acquiring a correspondence relationship between position coordinates of the image captured by the imaging device and position coordinates of the calibration pattern in the light illumination range; calculating an amount of parallax difference between the light distribution variable lamp and the imaging device; and correcting the correspondence relationship based on the amount of parallax difference and generating mutual position information between the light illumination range and the imaging range.

Another aspect of the present invention provides a calibration device that calibrates between a light illumination range of a light distribution variable lamp that illuminates a region ahead of a vehicle with light and an imaging range of an imaging device that captures an image of the region ahead of the vehicle. This device acquires an image captured by the imaging device of a calibration pattern that the light distribution variable lamp forms on a screen located at a distance from the light distribution variable lamp and the imaging device; acquires a correspondence relationship between position coordinates of the image and position coordinates of the calibration pattern in the light illumination range; calculates an amount of parallax difference between the light distribution variable lamp and the imaging device; and corrects the correspondence relationship based on the amount of parallax difference and generates mutual position information between the light illumination range and the imaging range.

It is to be noted that any combinations of the constituent elements above or an embodiment obtained by converting what is expressed by the present invention between a method, an apparatus, a system, and so forth is also valid as an aspect of the present invention.

ADVANTAGEOUS EFFECTS OF INVENTION

The present invention can enhance the accuracy of calibration between a lamp and an imaging device.

BRIEF DESCRIPTION OF DRAWINGS

[Fig. 1] Fig. 1 is a block diagram of a vehicle lamp system.
[Fig. 2] Figs. 2A and 2B are schematic diagrams of images capturing calibration patterns.
[Fig. 3] Fig. 3 is a schematic diagram for describing a parallax difference between a light distribution variable lamp and an imaging device.

DESCRIPTION OF EMBODIMENTS

Hereinafter, the present invention will be described based on some exemplary embodiments with reference to the drawings. The embodiments are illustrative in nature and are not intended to limit the invention. Not all the features or combinations thereof described according to the embodiments are necessarily essential to the invention. Identical or equivalent constituent elements, members, and processes shown in the drawings are given identical reference characters, and their duplicate description will be omitted, as appropriate. The scales and shapes of the components shown in the drawings are set merely for convenience in order to facilitate the description and are not to be interpreted as limiting, unless specifically indicated otherwise. When terms such as "first" and "second" are used in the present specification or in the claims, these terms do not indicate the order or the level of importance in any way and are merely used to distinguish a given component from another component, unless specifically indicated otherwise. Part of a member that is not important in describing the embodiments is omitted from the drawings.

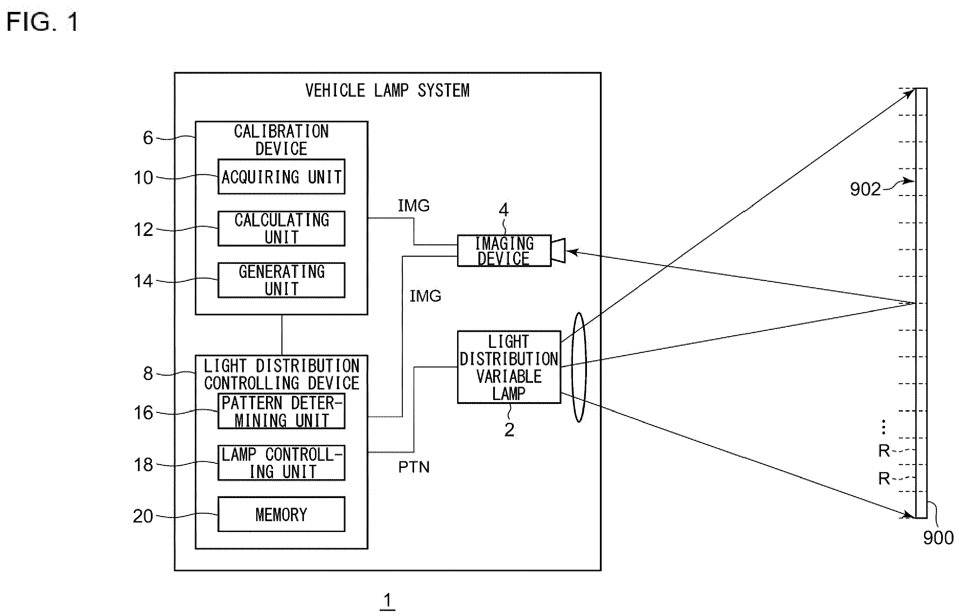

Fig. 1 is a block diagram of a vehicle lamp system 1. Fig. 1 depicts some of the constituent elements of the vehicle lamp system 1 in the form of functional blocks. These functional blocks are implemented, in terms of their hardware configuration, by elements and/or circuits, including a CPU or memory of a computer, or implemented, in terms of their software configuration, by a computer program or the like. It is to be appreciated by a person skilled in the art that these functional blocks can be implemented in a variety of forms through combinations of hardware and software.

The vehicle lamp system 1 includes a light distribution variable lamp 2, an imaging device 4, a calibration device 6, and a light distribution controlling device 8. The light distribution variable lamp 2, the imaging device 4, the calibration device 6, and the light distribution controlling device 8 may all be contained within a single housing, or some of these members may be provided outside such a housing.

For example, the light distribution variable lamp 2, the imaging device 4, the calibration device 6, and the light distribution controlling device 8 are housed in a lamp room. The lamp room is defined by a lamp body having an opening that opens to the front of the vehicle and a light-transmissive cover attached so as to cover the opening of the lamp body. The imaging device 4, the calibration device 6, and the light distribution controlling device 8 may be provided outside the lamp room, such as in the vehicle. In this case, the imaging device 4 may be an onboard camera. The calibration device 6 and the light distribution controlling device 8 may be, for example, entirely or partly constituted by a vehicle ECU.

The light distribution variable lamp 2 is capable of illuminating a region ahead of the host vehicle with a visible light beam of a variable intensity distribution. The light distribution variable lamp 2 is enabled to vary, independently of each other, the illuminance of light in a plurality of illuminated individual regions R arrayed ahead of the vehicle. The plurality of individual regions R are arrayed, for example, in a matrix. The light distribution variable lamp 2 receives information instructing on a light distribution pattern PTN from the light distribution controlling device 8 and emits a visible light beam having an intensity distribution corresponding to the light distribution pattern PTN. Thus, the light distribution pattern PTN is formed ahead of the host vehicle. A light distribution pattern PTN can be understood as a two-dimensional illuminance distribution of an illumination pattern 902 that the light distribution variable lamp 2 forms on a screen 900 ahead of the host vehicle.

There is no particular limitation on the configuration of the light distribution variable lamp 2, and the light distribution variable lamp 2 includes, for example, a plurality of light sources arrayed in a matrix and a lighting circuit that drives the light sources to turn them on independently of each other. Some preferred examples of such a light source include a semiconductor light source, such as a light-emitting diode (LED), a laser diode (LD), or an organic or inorganic electroluminescent (EL) element. The light sources are mapped to the respective individual regions R, and each individual region R is individually illuminated with light from the corresponding light source. The light distribution variable lamp 2 has a resolution, that is, a light distribution resolving power of, for example, from 1,000 pixels to 2,000,000 pixels. The resolution of the light distribution variable lamp 2 means the number of the unit regions, of a light distribution pattern PTN, whose illuminance can be varied independently of each other.

In order to form an illuminance distribution corresponding to a light distribution pattern PTN, the light distribution variable lamp 2 may include, for example but not limited to, a pattern forming device of a matrix type, such as a digital mirror device (DMD) or a liquid-crystal device, or a pattern forming device of a scan optics type that scans the space ahead of the host vehicle with light from the light sources.

The imaging device 4 has a sensitivity to a visible light range and repeatedly captures an image of the region ahead of the host vehicle. The imaging device 4 captures an image of reflected light of a visible light beam reflected by an object ahead of the vehicle. The imaging device 4 also captures an image of light from a front vehicle, including a leading vehicle and an oncoming vehicle. An image IMG that the imaging device 4 generates is sent at least to the calibration device 6 when calibration is to be performed, or sent at least to the light distribution controlling device 8 when light distribution control is to be performed.

An image IMG that the calibration device 6 or the light distribution controlling device 8 acquires from the imaging device 4 may be RAW image data or image data subjected to predetermined image processing by the imaging device 4. When the calibration device 6 or the light distribution controlling device 8 receives image data resulting from subjecting RAW image data generated by the imaging device 4 to image processing performed by a processing device other than the imaging device 4, this receiving also corresponds to acquiring of an image IMG from the imaging device 4. In the following description, RAW image data and data subjected to image processing are both referred to as an "image IMG" with no distinction therebetween.

The calibration device 6 calibrates between the light illumination range of the light distribution variable lamp 2 and the imaging range of the imaging device 4. The calibration device 6 generates mutual position information between the light illumination range and the imaging range and sends the generated mutual position information to the light distribution controlling device 8. The calibration device 6 can be constituted by a digital processor and may, for example, be constituted by a combination of a microcomputer including a CPU and a software program or by a field-programmable gate array (FPGA), an application specific IC (ASIC), or the like. The calibration device 6 includes, in one example, an acquiring unit 10, a calculating unit 12, and a generating unit 14. Each of these units operates as an integrated circuit constituting itself executes a program stored in a memory. A calibration method of calibrating between the light distribution variable lamp 2 and the imaging device 4 will be described later in detail.

The light distribution controlling device 8 executes ADB control of dynamically and adaptively controlling the light distribution of the light distribution variable lamp 2 in accordance with a target present in the region ahead. The light distribution controlling device 8 can be constituted by a digital processor and may, for example, be constituted by a combination of a microcomputer including a CPU and a software program or by a field-programmable gate array (FPGA), an application specific IC (ASIC), or the like. The light distribution controlling device 8 includes, in one example, a pattern determining unit 16, a lamp controlling unit 18, and a memory 20. Each of these units operates as an integrated circuit constituting itself executes a program stored in a memory.

Mutual position information generated by the calibration device 6 is stored into the memory 20. The pattern determining unit 16 performs, for example, known image processing on an image IMG acquired from the imaging device 4 and detects a target to be shaded, such as a front vehicle. The pattern determining unit 16 then determines a light distribution pattern PTN having a shaded portion to overlap the detected target to be shaded. In determining the light distribution pattern PTN, the pattern determining unit 16, using the mutual position information stored in the memory 20, identifies the position coordinates of the light illumination range of the light distribution variable lamp 2 corresponding to the position coordinates of the target to be shaded in the image IMG, and sets the shaded portion at the identified position coordinates. If the light distribution variable lamp 2 is constituted, for example, by an LED array, the position coordinates of the light illumination range can be understood as the position coordinates of the LED array. The pattern determining unit 16 sends information about the determined light distribution pattern PTN to the lamp controlling unit 18.

Based on the information about the light distribution pattern PTN, the lamp controlling unit 18 instructs the light distribution variable lamp 2 to form the light distribution pattern PTN. Thus, the light distribution pattern PTN is formed ahead of the host vehicle.

Next, a calibration method according to the present embodiment will be described. Calibration is executed, for example, in a production line in a state in which a screen 900 is disposed at a distance from the light distribution variable lamp 2 and the imaging device 4. In one example, a calibration execution instructing signal is sent to the calibration device 6 from the outside. In response to receiving the execution instructing signal, the calibration device 6 instructs the light distribution controlling device 8 to form a calibration pattern PTNc. In response, the light distribution controlling device 8 controls the light distribution variable lamp 2 so as to form the calibration pattern PTNc. As a result, the calibration pattern PTNc is formed on the screen 900 by the light distribution variable lamp 2.

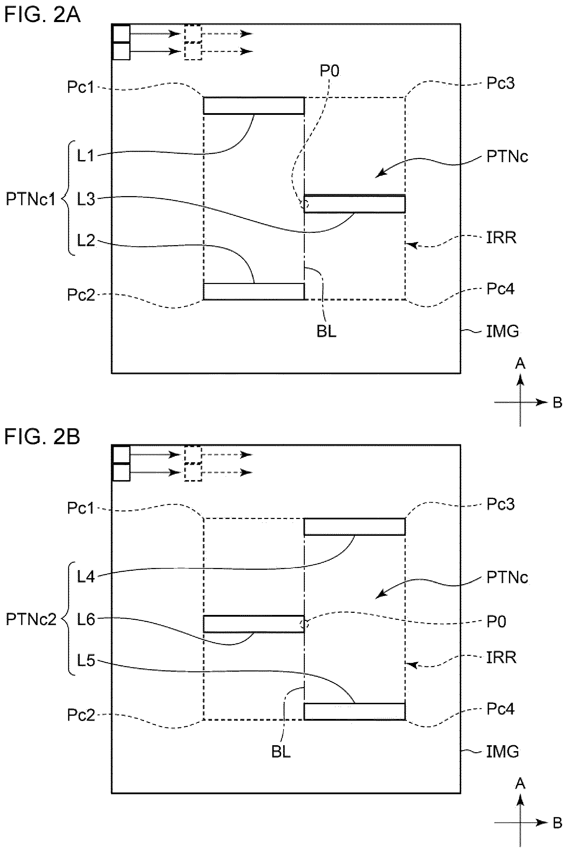

Figs. 2A and 2B are each a schematic diagram of an image IMG capturing a calibration pattern PTNc. In one example, the image IMG matches the imaging range of the imaging device 4. Preferably, at least a part of the calibration pattern PTNc is linear. Also, preferably, the calibration pattern PTNc includes a plurality of straight lines. The light illumination range IRR of the light distribution variable lamp 2 is rectangular and includes a first corner Pc1, a second corner Pc2, a third corner Pc3, and a fourth corner Pc4. Preferably, at least a part of the calibration pattern PTNc is on at least one of the corners and a center portion P0 of the light illumination range IRR.

The first corner Pc1 and the second corner Pc2 are located at the same coordinate along a second direction B but are offset from each other in a first direction A. The third corner Pc3 and the fourth corner Pc4 are located at the same coordinate along the second direction B but are offset from each other in the first direction A. The first corner Pc1 and the third corner Pc3 are located at the same coordinate along the first direction A but are offset from each other in the second direction B. The second corner Pc2 and the fourth corner Pc4 are located at the same coordinate along the first direction A but are offset from each other in the second direction B. The first direction A and the second direction B are orthogonal to each other. In one example, the first direction A extends in the up-down direction, and the second direction B extends in the right-left direction. The center portion P0 is the intersection of the two diagonals of the light illumination range IRR.

As shown in Figs. 2A and 2B, the calibration pattern PTNc according to the present embodiment includes a first pattern PTNc1 and a second pattern PTNc2. The first pattern PTNc1 is at least partly on the first corner Pc1, the second corner Pc2, and the center portion P0 of the light illumination range IRR. The second pattern PTNc2 is at least partly on the third corner Pc3, the fourth corner Pc4, and the center portion P0 of the light illumination range IRR.

To be more specific, the first pattern PTNc1 includes a first straight line L1, a second straight line L2, and a third straight line L3 each extending in the second direction B. The first straight line L1 extends from the first corner Pc1 to a center line BL, in the second direction B, of the light illumination range IRR. The second straight line L2 extends from the second corner Pc2 to the center line BL. The third straight line L3 extends from the midpoint of a side of the light illumination range IRR extending in the first direction A to the center line BL. The third straight line L3 according to the present embodiment extends from the midpoint of the side connecting the third corner Pc3 and the fourth corner Pc4 to the center line BL. Therefore, the first straight line L1 extends from the first corner Pc1 along the upper end of the light illumination range IRR within the region in the lateral half of the light illumination range IRR. The second straight line L2 extends from the second corner Pc2 along the lower end of the light illumination range IRR within the region in the lateral half of the light illumination range IRR. The third straight line L3 extends in the vertical center of the light illumination range IRR within the region in the lateral half that is opposite to the one within which the first straight line L1 and the second straight line L2 lie. Herein, the third straight line L3 may lie in the region the same as the region within which the first straight line L1 and the second straight line L2 lie.

The second pattern PTNc2 has a shape that is a mirror image of the first pattern PTNc1 inverted along the center line BL. Thus, the second pattern PTNc2 includes a fourth straight line L4, corresponding to the first straight line L1; a fifth straight line L5, corresponding to the second straight line L2; and a sixth straight line L6, corresponding to the third straight line L3. The fourth straight line L4 extends from the third corner Pc3 to the center line BL. The fifth straight line L5 extends from the fourth corner Pc4 to the center line BL. The sixth straight line L6 extends from the midpoint of a side of the light illumination range IRR extending in the first direction A to the center line BL. The sixth straight line L6 according to the present embodiment extends from the midpoint of the side connecting the first corner Pc1 and the second corner Pc2 to the center line BL. Therefore, the fourth straight line L4 extends from the third corner Pc3 along the upper end of the light illumination range IRR within the region in the lateral half of the light illumination range IRR. The fifth straight line L5 extends from the fourth corner Pc4 along the lower end of the light illumination range IRR within the region in the lateral half of the light illumination range IRR. The sixth straight line L6 extends in the vertical center of the light illumination range IRR within the region in the lateral half that is opposite to the region within which the fourth straight line L4 and the fifth straight line L5 lie. Herein, the sixth straight line L6 may lie in the region the same as the region within which the fourth straight line L4 and the fifth straight line L5 lie.

An image of the calibration pattern PTNc formed on the screen 900 is captured by the imaging device 4. According to the present embodiment, the first pattern PTNc1 and the second pattern PTNc2 are formed in random order, and the imaging device 4 captures images of both the first pattern PTNc1 and the second pattern PTNc2. An image IMG captured by the imaging device 4 is sent to the acquiring unit 10. The acquiring unit 10 acquires the correspondence relationship between the position coordinates of the image IMG and the position coordinates of the calibration pattern PTNc in the light illumination range IRR.

The acquiring unit 10 holds, in advance, the position coordinates of the calibration pattern PTNc in the actual light illumination range IRR. Therefore, by identifying the position of the calibration pattern PTNc in the image IMG capturing the calibration pattern PTNc, the acquiring unit 10 can extract the correspondence relationship between the position coordinates of the image IMG and the position coordinates of the light illumination range IRR. For example, when the light distribution variable lamp 2 is an LED array, the process above allows the acquiring unit 10 to extract the positional relationship between each pixel of the image IMG and each LED in the LED array.

The acquiring unit 10 performs a predetermined image analysis on the image IMG and thus identifies the position, within the image IMG, of each luminous point composing the calibration pattern PTNc. In one example, the acquiring unit 10 scans the upper two rows of the pixels in the image IMG from the top left to the right end and acquires the pixel value (luminance value) of each of the pixels. Once the scan reaches the right end, the acquiring unit 10 scans the rows of pixels below the scanned pixels. The next rows of pixels to be scanned may partly overlap the previously scanned rows of pixels. Repeating this process, the acquiring unit 10 acquires the pixel value of each of the pixels in the entire image IMG.

The first straight line L1 to the sixth straight line L6 each have a thickness covering two or more rows of pixels. For example, when an acquired pixel value is higher than or equal to a predetermined threshold within two rows of pixels, the acquiring unit 10 determines that that pixel is a part of the calibration pattern PTNc. In the following description, a pixel value higher than or equal to a threshold is referred to as a high pixel value, and a pixel value lower than the threshold is referred to a low pixel value. For example, when the pixel value acquired has changed from a low pixel value to a high pixel value as the scanning position reaches the region in which the first straight line L1 is formed in the image IMG, the acquiring unit 10 maps the position coordinates of that pixel with the high pixel value to the position coordinates of one end of the first straight line L1, and generates coordinate information of the one end side.

The acquiring unit 10, continuing to scan the image IMG, counts the number of pixels having a high pixel value. Then, when the pixel value acquired changes from a high pixel value to a low pixel value, the acquiring unit 10 determines whether the number of pixels counted matches the supposed length of the first straight line L1 in the image IMG (the number of pixels necessary for forming the first straight line L1). If the number of pixels counted matches the supposed length of the first straight line L1 or falls within a range of a predetermined margin (e.g., $\pm 1$ pixel), the acquiring unit 10 determines that the set of pixels having a high pixel value forms the first straight line L1. Then, the acquiring unit 10 maps the position coordinates of the last pixel having a high pixel value and the position coordinates of the other end of the first straight line L1 and generates the coordinate information of the other end side. Through the process described above, the acquiring unit 10 can acquire the correspondence relationship between the position coordinates of both ends of the first straight line L1 in the light illumination range IRR and the position coordinates of the image IMG.

The acquiring unit 10 performs the image analysis described above on each of the image IMG capturing the first pattern PTNc1 and the image IMG capturing the second pattern PTNc2. This process allows the acquiring unit 10 to identify the position coordinates of the first pattern PTNc1 in the light illumination range IRR relative to the position coordinates of the image IMG and the position coordinates of the second pattern PTNc2 in the light illumination range IRR relative to the position coordinates of the image IMG.

Through the image analysis described above, the acquiring unit 10 can acquire, as regards the two ends of each of the first straight line L1 to the sixth straight line L6, the correspondence relationship between the position coordinates of each end in the light illumination range IRR and the position coordinates of the image IMG. Thus, the acquiring unit 10 can extract the correspondence relationship between the position coordinates of the image IMG and the position coordinates of each of the four corners of the light illumination range IRR, the center portion P0, and the midpoints, in the second direction B, of the upper and lower sides of the light illumination range IRR.

In theory, the end of the first straight line L1 on the side of the center line BL is supposed to border on the end of the fourth straight line L4 on the side of the center line BL. The end of the second straight line L2 on the side of the center line BL is supposed to border on the end of the fifth straight line L5 on the side of the center line BL. The end of the third straight line L3 on the side of the center line BL is supposed to border on the end of the sixth straight line L6 on the side of the center line BL. If the pixels at the two ends that are supposed to border on each other overlap, the captured calibration pattern PTNc becomes blurred. The acquiring unit 10 can find the level of blurriness based on how the pixels overlap each other. With the level of blurriness found taken into consideration, the acquiring unit 10 can extract the correspondence relationship between the position coordinates with higher accuracy. The acquiring unit 10 sends information about the acquired correspondence relationship to the generating unit 14.

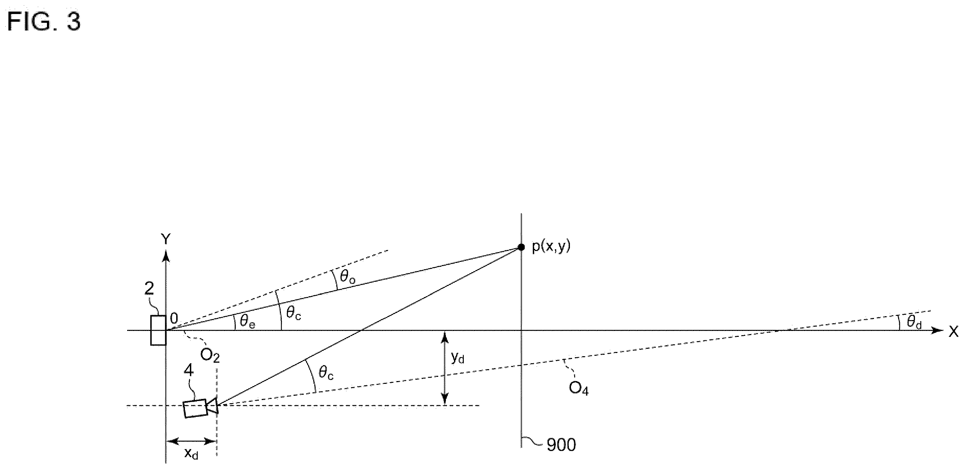

The calculating unit 12 calculates the amount of parallax difference between the light distribution variable lamp 2 and the imaging device 4. Fig. 3 is a schematic diagram for describing a parallax difference between the light distribution variable lamp 2 and the imaging device 4. As shown in Fig. 3, in one example, the light distribution variable lamp 2 and the imaging device 4 may be fixed in a positional relationship in which they are offset from each other by $x_d$ in the X-axis direction (e.g., second direction B) and are offset from each other by $y_d$ in the Y-axis direction (e.g., first direction A). Furthermore, the optical axis $O_2$ (which coincides with the X-axis) of the light distribution variable lamp 2 and the optical axis $O_4$ of the imaging device 4 may be offset from each other by an angle $\theta_d$.

Then, a calibration pattern PTNc may be formed on the screen 900 apart from the light distribution variable lamp 2 by a distance x in the X-axis direction. Fig. 3 shows a luminous point p in the calibration pattern PTNc. The luminous point p is formed at a position apart from the light distribution variable lamp 2 by the distance x in the X-axis direction and apart from the optical axis $O_2$ of the light distribution variable lamp 2 by a distance y. The angle toward the luminous point p from the light distribution variable lamp 2 is $\theta_e$. The angle toward the luminous point p from the imaging device 4 is $\theta_c$. The difference between the angle $\theta_e$ and the angle $\theta_c$ is the parallax difference $\theta_o$ between the light distribution variable lamp 2 and the imaging device 4. In one example, the parallax difference $\theta_o$ in the upward direction of the X-axis in Fig. 3 is regarded as the positive difference, and the parallax difference $\theta_o$ in the downward direction of the X-axis is regarded as the negative difference.

The light distribution variable lamp 2 and the imaging device 4 are offset from each other by $x_d$ and $y_d$. Meanwhile, the optical axis $O_2$ of the light distribution variable lamp 2 and the optical axis $O_4$ of the imaging device 4 are offset from each other by the angle $\theta_d$. In this case, the parallax difference $\theta_o$ between the light distribution variable lamp 2 and the imaging device 4 can be expressed by the following equation (1).

$$\text{Equation (1): } \theta_o = atan(y/x) - [atan\{(y - y_d)/(x - x_d)\} - \theta_d]$$

Based on the equation (1) above, the calculating unit 12 calculates the magnitude of the parallax difference $\theta_o$ between the light distribution variable lamp 2 and the imaging device 4 (this magnitude is referred to below as the amount of parallax difference, as appropriate). The calculating unit 12 holds, in advance, information pertaining to the light distribution resolving power of the light distribution variable lamp 2. Furthermore, the calculating unit 12 holds, in advance, information pertaining to the size of the light illumination range IRR in the image IMG, that is, information pertaining to the number of pixels corresponding to the light illumination range IRR. The distance x from the light distribution variable lamp 2 to the screen 900, the offset amount $x_d$ between the light distribution variable lamp 2 and the imaging device 4 in the X-axis direction, the offset amount $y_d$ in the Y-axis direction, and the offset angle $\theta_d$ between the optical axes are measured with known measurement techniques at the time of calibration and sent to the calculating unit 12. This configuration allows the calculating unit 12 to calculate the amount of parallax difference. The calculating unit 12 sends information about the calculated amount of parallax difference to the generating unit 14.

Due to the parallax difference $\theta_o$ between the light distribution variable lamp 2 and the imaging device 4, the correspondence relationship between the position coordinates of the image IMG acquired by the acquiring unit 10 and the position coordinates of the calibration pattern PTNc in the light illumination range IRR is off from the actual correspondence relationship by the amount of parallax difference. Hence, it is desirable to eliminate the parallax difference $\theta_o$ through the calibration between the light distribution variable lamp 2 and the imaging device 4. In one conceivable method of eliminating the parallax difference $\theta_o$, the screen 900 may be moved to a distance at which the parallax difference $\theta_o$ can become negligible, for each combination of a light distribution variable lamp 2 and an imaging device 4. This case, however, can lead to an increase in time and labor needed for calibration, which in turn can lead to a decrease in the production lead time or throughput of the vehicle lamp system 1.

In another conceivable case, the screen 900 may be disposed at a distance large enough to correspond to the maximum possible parallax difference $\theta_o$, and calibration may be performed with the position of the screen 900 fixed regardless of the combination of a light distribution variable lamp 2 and an imaging device 4. There, however, may be a case in which the screen 900 cannot be disposed as far away as desired because of the spatial constraints in the production line.

Accordingly, the calibration device 6 according to the present embodiment eliminates the parallax difference $\theta_o$ through a software-wise approach based on the correspondence relationship between the position coordinates of an image IMG and the position coordinates of a calibration pattern PTNc in a light illumination range IRR. Specifically, the generating unit 14, based on the amount of parallax difference acquired from the calculating unit 12, corrects the correspondence relationship between the position coordinates of the image IMG and the position coordinates of the calibration pattern PTNc in the light illumination range IRR acquired from the acquiring unit 10. Then, the generating unit 14 stores the corrected correspondence relationship into the memory 20 as mutual position information of the light illumination range IRR and the imaging range. The generating unit 14 according to the present embodiment generates first mutual position information by adding the amount of parallax difference to the position coordinates of the first pattern PTNc1. The generating unit 14 also generates second mutual position information by adding the amount of parallax difference to the position coordinates of the second pattern PTNc2. Then, the generating unit 14 stores the first mutual position information and the second mutual position information into the memory 20.

As described above, the calibration method according to the present embodiment includes forming a calibration pattern PTNc on a screen 900 located at a distance, capturing an image of this calibration pattern PTNc with the imaging device 4, acquiring the correspondence relationship between the position coordinates of an image IMG and the position coordinates of the light illumination range IRR with the calibration pattern PTNc serving as a position index, calculating the amount of parallax difference between the light distribution variable lamp 2 and the imaging device 4, and correcting the correspondence relationship based on the amount of parallax difference and generating mutual position information between the light illumination range IRR and the imaging range.

This method makes it possible to generate mutual position information with the parallax difference $\theta_o$ between the light distribution variable lamp 2 and the imaging device 4 eliminated, regardless of the distance from the light distribution variable lamp 2 to the screen 900, and thus the accuracy of calibration between the light distribution variable lamp 2 and the imaging device 4 can be enhanced. Furthermore, since the parallax difference $\theta_o$ is eliminated through a software-wise approach, any increase in time and labor needed for calibration can be curbed.

The calibration pattern PTNc according to the present embodiment is at least in part linear. This configuration can reduce the likelihood that, when a luminous point other than those in the calibration pattern PTNc is included in the image IMG, that luminous point is detected erroneously as part of the calibration pattern PTNc, and thus the accuracy of calibration can be enhanced. The calibration pattern PTNc includes a plurality of straight lines. At least a part of the calibration pattern PTNc is on at least one of the corners and the center portion P0 of the light illumination range IRR. These configurations can further enhance the accuracy of calibration.

The calibration pattern PTNc includes the first pattern PTNc1 located at least partly on the first corner Pc1, the second corner Pc2, and the center portion P0 of the light illumination range IRR, and the second pattern PTNc2 located at least partly on the third corner Pc3, the fourth corner Pc4, and the center portion P0 of the light illumination range IRR. The calibration device 6 identifies the position coordinates of the first pattern PTNc1 in the light illumination range IRR relative to the position coordinates of the image IMG, generates first mutual position information by adding the amount of parallax difference to the identified position coordinates, identifies the position coordinates of the second pattern PTNc2 in the light illumination range IRR relative to the position coordinates of the image IMG, and generates second mutual position information by adding the amount of parallax difference to the identified position coordinates. This configuration can further enhance the accuracy of calibration.

The first pattern PTNc1 includes the first straight line L1, the second straight line L2, and the third straight line L3 each extending in the second direction B orthogonal to the first direction A. The first straight line L1 extends from the first corner Pc1 to the center line BL, in the second direction B, of the light illumination range IRR. The second straight line L2 extends from the second corner Pc2 to the center line BL. The third straight line L3 extends from the midpoint of a side of the light illumination range IRR extending in the first direction A to the center line BL. The second pattern PTNc2 has a shape that is a mirror image of the first pattern PTNc1 inverted along the center line BL. This configuration can further enhance the accuracy of calibration.

Thus far, some embodiments according to the present invention have been described in detail. The embodiments described above merely illustrate some specific examples for implementing the present invention. The content of the embodiments does not limit the technical scope of the present invention, and a number of design changes, including modifications, additions, and deletions of constituent elements, can be made within the scope that does not depart from the sprit of the invention set forth in the claims. A new embodiment resulting from adding a design change has advantageous effects of the embodiments combined as well as the advantageous effects of the modification. With regard to the embodiments described above, the expressions "according to the present embodiment," "in the present embodiment," and so on are added for emphasis to the content that can be subjected to such a design change as described above, but a design change is also permitted on the content without these expressions. A desired combination of the constituent elements described above is also valid as an aspect of the present invention. Hatching added along a section in the drawings does not limit the material of such with hatching.

The invention according to the embodiments described above may also be identified by the items indicated below.

[First Item]

A calibration method of calibrating between a light illumination range (IRR) of a light distribution variable lamp (2) that illuminates a region ahead of a vehicle with light and an imaging range of an imaging device (4) that captures an image of the region ahead of the vehicle, the calibration method comprising:

forming a calibration pattern (PTNc) with the light distribution variable lamp (2) onto a screen (900) located at a distance from the light distribution variable lamp (2) and the imaging device (4);
capturing an image (IMG) of the calibration pattern (PTNc) on the screen (900) with the imaging device (4);
acquiring a correspondence relationship between position coordinates of the image (IMG) captured by the imaging device (4) and position coordinates of the calibration pattern (PTNc) in the light illumination range (IRR);
calculating an amount of parallax difference between the light distribution variable lamp (2) and the imaging device (4); and correcting the correspondence relationship based on the amount of parallax difference and generating mutual position information between the light illumination range (IRR) and the imaging range.

[Second Item]

The calibration method according to First Item, wherein at least a part of the calibration pattern (PTNc) is linear (L1 to L6).

[Third Item]

The calibration method according to First Item or Second Item, wherein the calibration pattern (PTNc) includes a plurality of straight lines (L1 to L6).

# EP 4 480 753 A1

[Fourth Item]

The calibration method according to any one of First Item to Third Item, wherein
the light illumination range (IRR) is rectangular, and at least a part of the calibration pattern (PTNc) is on at least one corner (Pc1 to Pc4) and a center portion (P0) of the light illumination range (IRR).

[Fifth Item]

The calibration method according to Fourth Item, wherein

the calibration pattern (PTNc) includes a first pattern (PTNc1) located at least partly on a first corner (Pc1), a second corner (Pc2), and the center portion (P0) of the light illumination range (IRR), and a second pattern (PTNc2) located at least partly on a third corner (Pc3), a fourth corner (Pc4), and the center portion (P0) of the light illumination range (IRR), and
the calibration method further includes
identifying position coordinates of the first pattern (PTNc1) in the light illumination range (IRR) relative to the position coordinates of the image (IMG), and generating first mutual position information by adding the amount of parallax difference to the position coordinates identified, and
identifying position coordinates of the second pattern (PTNc2) in the light illumination range (IRR) relative to the position coordinates of the image (IMG), and generating second mutual position information by adding the amount of parallax difference to the position coordinates identified.

[Sixth Item]

The calibration method according to Fifth Item, wherein

the first corner (Pc1) and the second corner (Pc2) are offset from each other in a first direction (A),
the first pattern (PTNc1) includes a first straight line (L1), a second straight line (L2), and a third straight line (L3) each extending in a second direction (B) orthogonal to the first direction (A),
the first straight line (L1) extends from the first corner (Pc1) to a center line (BL), in the second direction (B), of the light illumination range (IRR),
the second straight line (L2) extends from the second corner (Pc2) to the center line (BL),
the third straight line (L3) extends from a midpoint of a side of the light illumination range (IRR) extending in the first direction (A) to the center line (BL), and
the second pattern (PTNc2) has a shape that is a mirror image of the first pattern (PTNc1) inverted along the center line (BL) .

[Seventh Item]

A calibration device (6) that calibrates between a light illumination range (IRR) of a light distribution variable lamp (2) that illuminates a region ahead of a vehicle with light and an imaging range of an imaging device (4) that captures an image of the region ahead of the vehicle, the calibration device (6):

acquires an image (IMG) captured by the imaging device (4) of a calibration pattern (PTNc) that the light distribution variable lamp (2) forms on a screen (900) located at a distance from the light distribution variable lamp (2) and the imaging device (4);
acquires a correspondence relationship between position coordinates of the image (IMG) and position coordinates of the calibration pattern (PTNc) in the light illumination range (IRR);
calculates an amount of parallax difference between the light distribution variable lamp (2) and the imaging device (4); and corrects the correspondence relationship based on the amount of parallax difference and generates mutual position information between the light illumination range (IRR) and the imaging range.

INDUSTRIAL APPLICABILITY

The present invention can be used in calibration methods and calibration devices.

REFERENCE SIGNS LIST

2 light distribution variable lamp, 4 imaging device, 6 calibration device, 900 screen, IRR light illumination range, PTNc calibration pattern, PTNc1 first pattern, PTNc2 second pattern

**Claims**

1.  A calibration method of calibrating between a light illumination range of a light distribution variable lamp that illuminates a region ahead of a vehicle with light and an imaging range of an imaging device that captures an image of the region ahead of the vehicle, the calibration method comprising:

    forming a calibration pattern with the light distribution variable lamp onto a screen located at a distance from the light distribution variable lamp and the imaging device;
    capturing an image of the calibration pattern on the screen with the imaging device;
    acquiring a correspondence relationship between position coordinates of the image captured by the imaging device and position coordinates of the calibration pattern in the light illumination range;
    calculating an amount of parallax difference between the light distribution variable lamp and the imaging device; and
    correcting the correspondence relationship based on the amount of parallax difference and generating mutual position information between the light illumination range and the imaging range.

2.  The calibration method according to Claim 1, wherein at least a part of the calibration pattern is linear.

3.  The calibration method according to Claim 1 or 2, wherein
    the calibration pattern includes a plurality of straight lines.

4.  The calibration method according to any one of Claims 1 to 3, wherein

    the light illumination range is rectangular, and
    at least a part of the calibration pattern is on at least one corner and a center portion of the light illumination range.

5.  The calibration method according to Claim 4, wherein
    the calibration pattern includes a first pattern located at least partly on a first corner, a second corner, and the center portion of the light illumination range, and a second pattern located at least partly on a third corner, a fourth corner, and the center portion of the light illumination range, and

    the calibration method further includes
    identifying position coordinates of the first pattern in the light illumination range relative to the position coordinates of the image, and generating first mutual position information by adding the amount of parallax difference to the position coordinates identified, and
    identifying position coordinates of the second pattern in the light illumination range relative to the position coordinates of the image, and generating second mutual position information by adding the amount of parallax difference to the position coordinates identified.

6.  The calibration method according to Claim 5, wherein the first corner and the second corner are offset from each other in a first direction,

    the first pattern includes a first straight line, a second straight line, and a third straight line each extending in a second direction orthogonal to the first direction,
    the first straight line extends from the first corner to a center line, in the second direction, of the light illumination range,
    the second straight line extends from the second corner to the center line,
    the third straight line extends from a midpoint of a side of the light illumination range extending in the first direction to the center line, and
    the second pattern has a shape that is a mirror image of the first pattern inverted along the center line.

7.  A calibration device that calibrates between a light illumination range of a light distribution variable lamp that illuminates a region ahead of a vehicle with light and an imaging range of an imaging device that captures an image of the region ahead of the vehicle, the calibration device:

acquires an image captured by the imaging device of a calibration pattern that the light distribution variable lamp forms on a screen located at a distance from the light distribution variable lamp and the imaging device;

acquires a correspondence relationship between position coordinates of the image and position coordinates of the calibration pattern in the light illumination range;

calculates an amount of parallax difference between the light distribution variable lamp and the imaging device; and

corrects the correspondence relationship based on the amount of parallax difference and generates mutual position information between the light illumination range and the imaging range.

FIG. 1

EP 4 480 753 A1

FIG. 2A

FIG. 2B

FIG. 3

## INTERNATIONAL SEARCH REPORT

| | International application No. |
|---|---|
| | **PCT/JP2023/003252** |

### A. CLASSIFICATION OF SUBJECT MATTER

**B60Q 1/04**(2006.01)i; **G06T 7/80**(2017.01)i
FI: B60Q1/04 Z; G06T7/80

According to International Patent Classification (IPC) or to both national classification and IPC

### B. FIELDS SEARCHED

Minimum documentation searched (classification system followed by classification symbols)

B60Q1/04; G06T7/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-168915 A (KOITO MFG CO LTD) 23 September 2016 (2016-09-23) paragraphs [0023]-[0093], fig. 1-12 | 1-7 |
| A | JP 2008-094127 A (HITACHI LTD) 24 April 2008 (2008-04-24) paragraphs [0011]-[0026], fig. 1-11 | 1-7 |
| A | JP 2012-504520 A (ROBERT BOSCH GMBH) 23 February 2012 (2012-02-23) paragraphs [0018]-[0021], fig. 1-2 | 1-7 |
| A | JP 60-022641 A (TOYOTA JIDOSHA KK) 05 February 1985 (1985-02-05) pp. 1-4, fig. 1-5 | 1-7 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 February 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/003252**

| Patent document cited in search report | | | Publication date (day/month/year) | Patent family member(s) | | | Publication date (day/month/year) |
|---|---|---|---|---|---|---|---|
| JP | 2016-168915 | A | 23 September 2016 | US | 2016/0264042 | A1 | |
| | | | | paragraphs [0045]-[0120], fig. 1-12 | | | |
| | | | | DE | 102016203962 | A1 | |
| | | | | FR | 3033532 | A1 | |
| JP | 2008-094127 | A | 24 April 2008 | US | 2008/0084165 | A1 | |
| | | | | paragraphs [0024]-[0040], fig. 1-11 | | | |
| | | | | EP | 1908631 | A2 | |
| JP | 2012-504520 | A | 23 February 2012 | US | 2012/0127311 | A1 | |
| | | | | paragraphs [0019]-[0022], fig. 1-2 | | | |
| | | | | DE | 102008042537 | A1 | |
| | | | | CN | 102171067 | A | |
| JP | 60-022641 | A | 05 February 1985 | US | 4634275 | A | |
| | | | | columns 4-9, fig. 1-5 | | | |
| | | | | EP | 132372 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015064964 A